(19)

Europäisches Patentamt
European Patent Office
Office européen des brevets

(11) **EP 3 933 967 A1**

(12) **EUROPEAN PATENT APPLICATION**
published in accordance with Art. 153(4) EPC

(43) Date of publication:
**05.01.2022 Bulletin 2022/01**

(21) Application number: **20763399.1**

(22) Date of filing: **21.02.2020**

(51) Int Cl.:
*H01M 4/13* (2010.01)        *H01M 4/139* (2010.01)
*H01M 4/62* (2006.01)

(86) International application number:
**PCT/JP2020/007025**

(87) International publication number:
**WO 2020/175362 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2019   JP 2019036085**

(71) Applicants:
• **Panasonic Corporation**
  **Kadoma-shi**
  **Osaka 571-8501 (JP)**
• **SANYO Electric Co., Ltd.**
  **Daito-shi**
  **Osaka 574-8534 (JP)**

(72) Inventors:
• **IWAMI Yasunobu**
  **Osaka-shi, Osaka 540-6207 (JP)**
• **MORIKAWA Takaharu**
  **Osaka-shi, Osaka 540-6207 (JP)**
• **NAKAMORI Toshiyuki**
  **Osaka-shi, Osaka 540-6207 (JP)**
• **ICHIKAWA Tomohiro**
  **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **SLURRY FOR NON-AQUEOUS ELECTROLYTE SECONDARY CELL, METHOD FOR MANUFACTURING SLURRY FOR NON-AQUEOUS ELECTROLYTE SECONDARY CELL, ELECTRODE FOR NON-AQUEOUS ELECTROLYTE SECONDARY CELL, AND NON-AQUEOUS ELECTROLYTE SECONDARY CELL**

(57)     The purpose of the present disclosure is to provide a slurry for a non-aqueous electrolyte secondary cell capable of obtaining an electrode mixture layer showing excellent adhesion with a current collector. The slurry for a non-aqueous electrolyte secondary cell, which is one mode of the present disclosure, contains: an electrode mixture containing an electrode active material, lithium carbonate, and carboxymethylcellulose or a salt thereof; and water. The lithium carbonate content is in the range of 33 to 300 ppm with respect to the total mass of the electrode mixture.

Figure 1

EP 3 933 967 A1

**Description**

TECHNICAL FIELD

The present invention relates to a slurry for an electrode of a non-aqueous electrolyte secondary battery, a method for producing a slurry for an electrode of a non-aqueous electrolyte secondary battery, an electrode for a non-aqueous electrolyte secondary battery, and a non-aqueous electrolyte secondary battery.

BACKGROUND ART

Recently, a non-aqueous electrolyte secondary battery comprising a positive electrode, a negative electrode, and a non-aqueous electrolyte has been widely used as a secondary battery providing high output and a high energy density, the non-aqueous electrolyte secondary battery charging/discharging by allowing, for example, lithium ions to move between the positive electrode and negative electrode.

For example, Patent Literature 1 discloses a non-aqueous electrolyte secondary battery comprising a negative electrode including a negative electrode active material and lithium carbonate, and also discloses that deterioration in charging/discharging cyclic characteristics is prevented in the secondary battery.

For example, Patent Literature 2 discloses a non-aqueous electrolyte secondary battery comprising a negative electrode including a negative electrode active material, lithium carbonate, and carboxymethyl cellulose, wherein the content of the lithium carbonate is 1% to 10% based on the weight of the negative electrode, and also discloses that the secondary battery ensures the safety thereof.

CITATION LIST

PATENT LITERATURE

PATENT LITERATURE 1: Japanese Unexamined Patent Application Publication No. Hei 7-235297
PATENT LITERATURE 2: Japanese Unexamined Patent Application Publication No. Hei 8-138743
PATENT LITERATURE 3: Japanese Unexamined Patent Application Publication No. 2013-114959
PATENT LITERATURE 4: Japanese Unexamined Patent Application Publication No. 2003-272619
PATENT LITERATURE 5: International Patent Application Publication WO 2012/002451
PATENT LITERATURE 6: International Patent Application Publication WO 2012/011555

SUMMARY

TECHNICAL PROBLEM

A negative electrode and a positive electrode can be obtained by applying a slurry including an electrode mixture and water to an electrode current collector and drying the resultant to form an electrode mixture layer on the electrode current collector, the electrode mixture including, for example, an electrode active material (a negative electrode active material and a positive electrode active material, respectively) and carboxymethyl cellulose. However, the slurry including carboxymethyl cellulose may exhibit, for example, a reduced viscosity during the production of an electrode to thereby result in a decrease in the stability of applying the slurry to an electrode current collector, which may lead to a decrease in the adhesiveness of the electrode mixture layer to the electrode current collector.

Then, it is an advantage of the present invention to provide a slurry for an electrode of a non-aqueous electrolyte secondary battery which slurry can form an electrode mixture layer having desirable adhesiveness to an electrode current collector, and also provide the method for producing the same. It is another advantage of the present invention to provide an electrode for a non-aqueous electrolyte secondary battery having desirable adhesiveness between an electrode current collector and an electrode mixture layer, and also provide a non-aqueous electrolyte secondary battery.

SOLUTION TO PROBLEM

A slurry for an electrode of a non-aqueous electrolyte secondary battery of one aspect of the present disclosure includes: an electrode mixture including an electrode active material, lithium carbonate, and carboxymethyl cellulose or a salt thereof; and water, wherein a content of the lithium carbonate is within the range from 33 ppm to 300 ppm based on the total mass of the electrode mixture.

A method for producing a slurry for an electrode of a non-aqueous electrolyte secondary battery of one aspect of the present disclosure comprises mixing: an electrode mixture including an electrode active material, lithium carbonate, and carboxymethyl cellulose or a salt thereof; and water, to thereby produce the slurry for an electrode, wherein a content of the lithium carbonate is within the range from 33 ppm to 300 ppm based on the total mass of the electrode mixture.

An electrode for a non-aqueous electrolyte secondary battery of one aspect of the present disclosure comprises: a current collector and an electrode mixture layer on the current collector,

the electrode mixture layer including an electrode active material, lithium carbonate, and carboxymethyl cellulose or a salt thereof,
wherein a content of the lithium carbonate is within the range from 33 ppm to 300 ppm based on the total mass of the electrode mixture.

A non-aqueous electrolyte secondary battery of one aspect of the present disclosure includes a positive electrode, a negative electrode, and a non-aqueous electrolyte, wherein at least one of the positive electrode and the negative electrode is the above-described electrode for a non-aqueous electrolyte secondary battery.

ADVANTAGEOUS EFFECTS OF INVENTION

According to the slurry for an electrode of a non-aqueous electrolyte secondary battery and the method for producing the same of one aspect of the present disclosure, an electrode mixture layer having desirable adhesiveness to a current collector can be obtained. Furthermore, according to the electrode for a non-aqueous electrolyte secondary battery and the non-aqueous electrolyte secondary battery of one aspect of the present disclosure, desirable adhesiveness between a current collector and an electrode mixture layer can be ensured.

BRIEF DESCRIPTION OF DRAWINGS

FIG. 1 is a sectional view illustrating a non-aqueous electrolyte secondary battery of an exemplary embodiment.
FIG. 2 is a schematic illustration of a device for determining the peel strength of a negative electrode mixture layer from a negative electrode current collector.

DESCRIPTION OF EMBODIMENTS

As described hereinabove, a slurry including carboxymethyl cellulose may exhibit, for example, a reduced viscosity during the production of an electrode to thereby result in a decrease in the stability of applying the slurry to an electrode current collector, which may lead to a decrease in the adhesiveness of the electrode mixture layer to the electrode current collector. As a result of the earnest studies, the present inventors have found that an electrode mixture layer having desirable adhesiveness to an electrode current collector can be obtained by incorporating a specific amount of lithium carbonate into the slurry, and thus have reached the slurry of the aspect described below.

A slurry for an electrode of a non-aqueous electrolyte secondary battery of one aspect of the present disclosure includes: an electrode mixture including an electrode active material, lithium carbonate, and carboxymethyl cellulose or a salt thereof; and water, wherein a content of the lithium carbonate is within the range from 33 ppm to 300 ppm based on the total mass of the electrode mixture.

A slurry including carboxymethyl cellulose may exhibit, for example, a reduced viscosity during the production of an electrode to thereby result in a decrease in the stability of applying the slurry to an electrode current collector, which may lead to a decrease in the adhesiveness of the electrode mixture layer to the current collector. This is probably because of bacteria which are unavoidably present in the slurry. Specifically, it is considered that the polymer chain of carboxymethyl cellulose is cleaved by an enzyme from the bacteria to results in, for example, a decrease in the viscosity of the slurry during the production of an electrode, and that this lead to a decrease in the adhesiveness of the electrode mixture layer to the electrode current collector. When lithium carbonate is contained in an amount within the range from 33 ppm to 300 ppm based on the total mass of the electrode mixture as in the slurry of one aspect of the present disclosure, the activity of the enzyme from bacteria can be decreased, and the multiplication of bacteria can also be prevented. It is considered that as a result, the cleavage of the polymer chain of carboxymethyl cellulose and therefore, for example, the decrease in the viscosity of the slurry during the production of an electrode can be prevented to thereby obtain an electrode mixture layer having desirable adhesiveness to an electrode current collector. It is considered that when the content of the lithium carbonate is less than 33 ppm based on the total mass of the electrode mixture, the activity of the enzyme from bacteria in the slurry cannot be decreased sufficiently, and also that in that case, multiplication of bacteria cannot be prevented sufficiently. As a result, the cleavage of the polymer chain of carboxymethyl cellulose cannot be prevented sufficiently, which results in, for example, the decrease in the viscosity of the slurry during the production of an electrode, and the adhesiveness of the electrode mixture layer to an electrode current collector is thus decreased. It is also considered that when the content of the lithium carbonate is more than 300 ppm based on the total mass of the electrode mixture, the lithium carbonate itself acts a factor of the decrease in the adhesiveness of the electrode mixture layer to the electrode current collector.

The electrode for a non-aqueous electrolyte secondary battery of one aspect of the present disclosure comprises: a current collector and an electrode mixture layer on the current collector, the electrode mixture layer including an electrode active material, lithium carbonate, and carboxymethyl cellulose or a salt thereof, wherein a content of the lithium carbonate is within the range from 33 ppm to 300 ppm based on the total mass of the electrode mixture layer. The electrode for a non-aqueous electrolyte secondary battery of one aspect of the present disclosure can be obtained by using the slurry for an electrode of a non-aqueous electrolyte secondary battery which slurry is of one aspect of the present disclosure and is described above, and therefore desirable adhesiveness between the electrode mixture layer and the electrode current collector is ensured in the electrode. Also in a non-aqueous electrolyte secondary battery, which includes the electrode for the non-aqueous electrolyte secondary battery of one aspect of the present disclosure, desirable adhesiveness between the electrode mixture layer and the current collector is ensured, and deterioration in charging/discharging cyclic characteristics is prevented, for example.

Embodiments of the slurry for an electrode of a non-aqueous electrolyte secondary battery of one aspect of the present disclosure will now be described below. Both of a slurry for a negative electrode and a slurry for a positive electrode will be described below.

<Slurry for Negative Electrode>

The slurry for a negative electrode includes: a negative electrode mixture including a negative electrode active material, lithium carbonate, and carboxymethyl cellulose or a salt thereof, and a binder optionally added; and water, and the content of the lithium carbonate is within the range from 33 ppm to 300 ppm based on the total mass of the negative electrode mixture.

The negative electrode active material is not particularly limited as long as it is a material capable of intercalating and deintercalating lithium ions, and examples thereof include metal lithium; lithium alloys such as lithium/aluminum alloy, lithium/lead alloys, lithium/silicon alloys, and lithium/tin alloys; carbon materials such as graphite, coke, and calcined products of organic matters; metal oxides such as $SnO_2$, $SnO$, and $TiO_2$. These may be used singly or in combinations of two or more thereof.

For example, the content of the negative electrode active material is preferably within the range from 90 mass% to 99 mass%, and more preferably within the range from 95 mass% to 98 mass%, based on the total mass of the negative electrode mixture.

The carboxymethyl cellulose or a salt thereof serves as a thickener that increases the viscosity of the slurry for a negative electrode, and it is considered that the carboxymethyl cellulose or a salt thereof also serves as a binder for binding particles of, for example, the negative electrode active material. Examples of the salts of carboxymethyl cellulose include monovalent metal salts such as alkali metal salts (e.g. lithium salt, sodium salt, potassium salt, rubidium salt, and cesium salt); divalent metal salts such as alkaline earth metal salts (e.g., calcium salt and magnesium salts); quaternary ammonium salt, amine salts, substituted amine salts (e.g., salts of alkanolamine such as ethanolamine); and double salts thereof.

For example, the content of the carboxymethyl cellulose or a salt thereof is preferably within the range from 1 mass% to 5 mass%, and preferably within the range from 1 mass% to 2.5 mass%, based on the total mass of the negative electrode mixture.

The lithium carbonate used may be, for example, an inexpensive commercially available product or industrial grade product. In view of dispersibility, solubility, or the like in the slurry for a negative electrode, the lithium carbonate is preferably undergone grinding treatment before use, to adjust the average particle size and the maximum particle size. The grinding treatment is preferably, but not particularly limited to, dry grinding using jet mill or ball mill, for example.

The content of the lithium carbonate is within the range from 33 ppm to 300 ppm based on the total mass of the negative electrode mixture. In view of effectively preventing the cleavage of the polymer chain of carboxymethyl cellulose due to bacteria in the slurry to thereby obtain an electrode mixture layer having more desirable adhesiveness to an electrode current collector, the content of the lithium carbonate is preferably within the range from 66 ppm to 300 ppm, and more preferably 66 ppm to 200 ppm.

Water is preferably, but not particularly limited to, water having a low impurity concentration, and purified water such as ion-exchanged water may be used, for example.

Examples of the binder include fluororesin such as polytetrafluoroethylene (PTFE) and polyvinylidene fluoride (PVdF), polyvinylpyrrolidone (PVP), polyacrylonitrile (PAN), polyimide resin, acrylic resin, polyolefin resin, styrene-butadiene rubber (SBR), polyacrylic acid (PAA) and a salt thereof, and polyvinyl alcohol (PVA). Among these, styrene-butadiene rubber (SBR), polyacrylic acid (PAA) and a salt thereof, and polyvinyl alcohol (PVA) are preferable in view of dispersibility, solubility, or the like in the slurry for a negative electrode. These may be used singly or in combinations of two or more thereof.

For example, the content of the binder is preferably within the range from 1 mass% to 5 mass%, and more preferably within the range from 1 mass% to 2.5 mass%, based on the total mass of the negative electrode mixture.

The method for producing the slurry for a negative electrode may include, first, mixing a negative electrode active material, lithium carbonate, and carboxymethyl cellulose or a salt thereof in a predetermined mass ratio and also mixing a binder therewith in a predetermined mass ratio, if needed, to thereby obtain a negative electrode mixture. The content of the lithium carbonate is within the range from 33 ppm to 300 ppm based on the total mass of the negative electrode mixture. The method may include then mixing the resulting negative electrode mixture with an adequate amount of water to thereby obtain a slurry for a negative electrode. The pH of the slurry for a negative electrode is preferably within the range from 8 to 9 in view of the decrease in the activity of the enzyme from bacteria and the prevention of multiplication of bacteria. When the content of the lithium carbonate is within the above described range, the pH of the slurry for a negative electrode is generally within the range from 8 to 9.

<Slurry for Positive Electrode>

The slurry for a positive electrode includes: a positive electrode mixture including a positive electrode active material, lithium carbonate, and carboxymethyl cellulose or a salt thereof, and a binder added if needed and a conductive agent added if needed; and water. The content of the lithium carbonate is within the range from 33 ppm to 300 ppm based on the total mass of the positive electrode mixture, and is preferably within the range from 66 ppm to 300 ppm, and more preferably within the range from 66 ppm to 200 ppm, as in the slurry for a negative electrode.

For example, the positive electrode active material includes a lithium-containing transition metal oxide. For example, the metal element included in the lithium-containing transition metal oxide may be at least one selected from the group consisting of magnesium (Mg), aluminum (Al), calcium (Ca), scandium (Sc), titanium (Ti), vanadium (V), chromium (Cr), manganese (Mn), iron (Fe), cobalt (Co), nickel (Ni), copper (Cu), zinc (Zn), gallium (Ga), germanium (Ge), yttrium (Y), zirconium (Zr), Tin (Sn), antimony (Sb), tungsten (W), lead (Pb), and bismuth (Bi). Among these, at least one selected from the group consisting of Co, Ni, Mn, and Al is preferably included.

As for lithium carbonate, carboxymethyl cellulose or a salt thereof, water, and the binder, the descriptions for the slurry for a negative electrode are also applied to the slurry for a positive electrode, and the descriptions of these components are omitted here.

Examples of the conductive agent include carbon materials such as carbon black (CB), acetylene black (AB), Ketjenblack, and graphite. These may be used singly or in combinations of two or more thereof.

The method for producing the slurry for a positive electrode may include, first, mixing a positive electrode active material, lithium carbonate, and carboxymethyl cellulose or a salt thereof in a predetermined mass ratio and also mixing a binder and a conductive agent therewith in a predetermined mass ratio, if needed, to thereby obtain a positive electrode mixture. The content of the lithium carbonate is within the range from 33 ppm to 300 ppm based on the total mass of the positive electrode mixture. The method may include then mixing the resulting positive electrode mixture with an adequate amount of water to thereby obtain a slurry for a positive electrode. The pH of the slurry for a positive electrode is preferably within the range from 8 to 9 in view of the decrease in the activity of the enzyme from bacteria and the prevention of multiplication of bacteria, as in the slurry for a negative electrode. When the content of the lithium carbonate is within the above described range, the pH of the slurry for a positive electrode is generally within the range from 8 to 9.

The present embodiment of the slurry for an electrode of a non-aqueous electrolyte secondary battery may be applied to both of the slurry for a positive electrode and the slurry for a negative electrode, or may be applied to either one of them. When the present embodiment of the slurry for an electrode of a non-aqueous electrolyte secondary battery is applied to either one of them, the other slurry for the other electrode preferably includes an organic solvent, such as NMP, instead of water as a dispersing medium. A slurry including an organic solvent, such as NMP, instead of water as a dispersing medium tends to have high stability of applying the slurry even with no carboxymethyl cellulose or a salt thereof, and therefore, the amount of lithium carbonate added to reduce the activity of the enzyme from bacteria can be reduced or zero. Generally, an organic solvent, such as NMP, can be used as a dispersing medium for a slurry for a positive electrode. On the other hand, water is likely to be preferred as a dispersing medium for a slurry for a negative electrode in view of, for example, the stability of applying it. Accordingly, the slurry for an electrode of a non-aqueous electrolyte secondary battery of the present embodiment is preferably used as at least a slurry for a negative electrode.

For example, the slurry for an electrode including an organic solvent, such as NMP, instead of water as a dispersing medium includes: an electrode mixture including an electrode active material, a binder, and others; and the organic solvent, such as NMP. Preferred examples of the binder in this case include fluororesins, such as polytetrafluoroethylene (PTFE) and poly(vinylidene fluoride) (PVdF), polyvinylpyrrolidone (PVP), polyacrylonitrile (PAN), polyimide resins, acrylic resins, and polyolefin resins. The electrode mixture may also include a conductive agent, if needed.

The electrode of a non-aqueous electrolyte secondary battery (positive electrode, negative electrode) and the non-aqueous electrolyte secondary battery comprising the electrode of a non-aqueous electrolyte secondary battery, according to the present embodiment, will be described below.

<Non-Aqueous Electrolyte Secondary Battery>

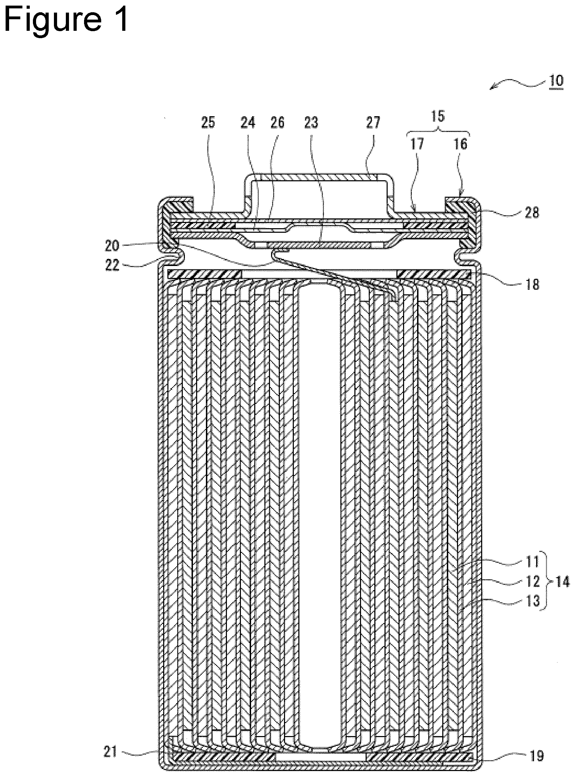

FIG. 1 is a sectional view of a non-aqueous electrolyte secondary battery of an exemplary embodiment. As shown in FIG. 1, the non-aqueous electrolyte secondary battery 10 comprises an electrode assembly 14, a non-aqueous electrolyte, and a battery case 15 housing the electrode assembly 14 and the non-aqueous electrolyte. The electrode assembly 14 comprises a positive electrode 11, a negative electrode 12, and a separator 13 interposed therebetween. The electrode assembly 14 has a wound structure in which the positive electrode 11 and the negative electrode 12 are wound together with the separator 13 interposed therebetween. The electrode assembly 14 is not limited to such a wound type and may be, for example, a laminate type in which positive electrodes and negative electrodes are laminated alternately with separators interposed therebetween.

The non-aqueous electrolyte includes a non-aqueous solvent and an electrolyte salt dissolved in the non-aqueous solvent. Example of the non-aqueous solvent to be used include esters, ethers, nitriles, amides, and mixed solvents of two or more thereof. The non-aqueous solvent may include a halogen-substituted product formed by replacing at least one hydrogen atom of any of the above solvents with a halogen atom such as fluorine. The non-aqueous electrolyte is not limited to a liquid electrolyte and may be a solid electrolyte. As the electrolyte salt, a lithium salt such as $LiPF_6$ is used, for example.

The battery case 15 is composed of a cylindrical package can 16 having a closed-end and a sealing assembly 17 to close the opening of the package can 16. The battery case 15 is not limited to a case having a cylindrical shape, and may be a metallic case having a rectangular shape (for a rectangular battery), a coin shape (for a coin battery), or another shape, or a laminated film case composed of a metal film and a resin film laminated therewith (for a laminated battery).

The package can 16 is, for example, a cylindrical metallic package can having a closed-end. A gasket 28 is provided between the package can 16 and the sealing assembly 17 to ensure that the battery case is tightly sealed. The package can 16 includes a projecting portion 22 formed by, for example, pressing the lateral surface from outside to support the sealing assembly 17. The projecting portion 22 is preferably formed annularly along the circumferential direction of the package can 16, and the upper surface thereof supports the sealing assembly 17.

The sealing assembly 17 includes a bottom board 23, a lower vent member 24, an insulating member 25, an upper vent member 26, and a cap 27, these members being piled in this order from the electrode assembly 14 side. Each of the members constituting the sealing assembly 17 has, for example, a disk or ring shape, and the members other than the insulating member 25 are electrically connected to each other. The lower vent member 24 and the upper vent member 26 are connected to each other at their middle portions and the insulating member 25 is interposed between their circumferences. If the internal pressure of the battery increases by abnormal heat generation, the lower vent member 24 changes its shape so as to push up the upper vent member 26 toward the cap 27, and the lower vent member 24 thus ruptures to break the electrical connection between the lower vent member 24 and the upper vent member 26. If the internal pressure further increases, the upper vent member 26 ruptures to discharge gas through the opening of the cap 27.

The non-aqueous electrolyte secondary battery 10 comprises insulating plates 18 and 19 provided above and under, respectively, the electrode assembly 14. In the example shown in FIG. 1, a positive electrode lead 20 attached to the positive electrode 11 passes through a through-hole in the insulating plate 18 and extends toward the sealing assembly 17, and a negative electrode lead 21 attached to the negative electrode 12 extends on the outside of the insulating plate 19 to the bottom side of the package can 16. The positive electrode lead 20 is connected to the lower surface of the bottom board 23 of the sealing assembly 17 by welding or the like, and the cap 27 of the sealing assembly 17, which is electrically connected to the bottom board 23, serves as a positive electrode terminal. The negative electrode lead 21 is connected to the inner surface of the bottom of the package can 16 by welding or the like, and the package can 16 serves as a negative electrode terminal.

<Positive Electrode>

The positive electrode 11 comprises a positive electrode current collector and a positive electrode mixture layer formed on the positive electrode current collector. The positive electrode 11 can be obtained by, for example, applying the slurry for a positive electrode of the present embodiment to both sides of a positive electrode current collector, drying the resultant coatings to form positive electrode mixture layers on the positive electrode current collector, and then pressing the positive electrode mixture layers. The positive electrode mixture layer of the positive electrode 11 produced by using the slurry for a positive electrode of the present embodiment includes a positive electrode active material, lithium carbonate, carboxymethyl cellulose or a salt thereof, and a binder optionally added and a conductive agent optionally added, and the lithium carbonate content thereof is within the range from 33 ppm to 300 ppm based on the total mass of the positive electrode mixture layer. The positive electrode 11 may be produced by using a slurry including an organic solvent, such as NMP, instead of water as a dispersing medium, as described hereinbefore.

As the positive electrode current collector, foil of a metal that is stable in the electric potential range of the positive electrode, such as aluminum, a film with such a metal disposed as an outer layer, or the like can be used. The materials for forming the positive electrode mixture layer are as described hereinbefore, and the descriptions thereof are omitted here.

<Negative Electrode>

The negative electrode 12 comprises a negative electrode current collector and a negative electrode mixture layer formed on the negative electrode current collector. The negative electrode 12 can be obtained by, for example, applying the slurry for a negative electrode of the present embodiment to both sides of a negative electrode current collector, drying the resultant coatings to form negative electrode mixture layers on the negative electrode current collector, and then pressing the negative electrode mixture layers. The negative electrode mixture layer of the negative electrode 12 produced by using the slurry for a negative electrode of the present embodiment includes a negative electrode active material, lithium carbonate, carboxymethyl cellulose or a salt thereof, and a binder optionally added, and the lithium carbonate content thereof is within the range from 33 ppm to 300 ppm based on the total mass of the negative electrode mixture layer. Although the negative electrode 12 may be produced by using a slurry including an organic solvent, such as NMP, instead of water as a dispersing medium, as described hereinbefore, the negative electrode 12 is preferably produced by using the slurry for a negative electrode of the present embodiment.

As the negative electrode current collector, foil of a metal that is stable in the electric potential range of the negative electrode, such as copper, a film with such a metal disposed as an outer layer, or the like can be used. The materials for forming the negative electrode mixture layer are as described hereinbefore, and the descriptions thereof are omitted here.

<Separator>

For example, an ion-permeable and insulating porous sheet is used as the separator 13. Specific examples of the porous sheet include a microporous thin film, woven fabric, and nonwoven fabric. Suitable examples of the material for the separator 13 include olefin resins such as polyethylene, polypropylene, and a copolymer including at least one of ethylene and propylene; and cellulose. The separator 13 may be a laminate including a cellulose fiber layer and a layer of fibers of a thermoplastic resin such as an olefin resin. The separator 13 may be a multi-layered separator including a polyethylene layer and a polypropylene layer. The surface of the separator 13 may be coated with, for example, an aramid resin. A heat-resistant layer including an inorganic filler may be formed on at least one of the interface between the separator 13 and the positive electrode 11 and that between the separator 13 and the negative electrode 12.

EXAMPLES

Hereinafter, the present invention will be described in more details by way of Examples, but the present invention is not limited thereby.

<Example 1>

[Positive Electrode]

Cobalt, and 0.1 mol% of zirconium, 1 mol% of magnesium, and 1 mol% of aluminum, each based on cobalt, were coprecipitated, and the resultant was subjected to pyrolysis reaction to obtain tricobalt tetraoxide containing zirconium, magnesium, and aluminum. Lithium carbonate as a lithium source was mixed therewith, and the mixture was fired at 850°C for 20 hours to obtain lithium cobalt oxide containing zirconium, magnesium, and aluminum ($LiCo_{0.979}Zr_{0.001}Mg_{0.01}Al_{0.01}O_2$). The resulting product was used as a positive electrode active material.

95 mass% of the above-described positive electrode active material, 2.5 mass% of a carbon powder as a conductive agent, and 2.5 mass% of a powder of poly(vinylidene fluoride) as a binder were mixed, and the resultant was mixed with N-methylpyrrolidone (NMP) solution to prepare a slurry for a positive electrode. The slurry for a positive electrode was applied to both sides of an aluminum-made positive electrode current collector having a thickness of 15 $\mu$m by doctor blade method to form positive electrode mixture layers on both sides of the positive electrode current collector. Then, the resultant was pressed with a mill roll and cut into a predetermined size. The resulting product was used as a positive electrode.

[Negative Electrode]

Graphite having an average particle size of 22 μm was provided as a negative electrode active material. The graphite, carboxymethyl cellulose (CMC), and a styrene-butadiene rubber (SBR) were mixed in a mass ratio, graphite:CMC:SBR, of 97:1.5:1.0, and a predetermined amount of lithium carbonate was added thereto to obtain a negative electrode mixture. The content of the lithium carbonate was 66 ppm based on the total mass of the negative electrode mixture. Ion exchanged water was added to and mixed with the negative electrode mixture to prepare a slurry for a negative electrode. The solids content of the slurry for a negative electrode was 50%.

On the resulting negative electrode slurry, the viscosity was determined at the production and 96 hours after the production with a Brookfield viscometer (TOKI SANGYO CO., LTD.; TVB10). The change in the viscosity after 96 hours was obtained using the following equation. The result is shown in Table 1.

Change (%) in viscosity after 96 hours = (Viscosity after 96 hours)/ (Viscosity at production) x 100

The negative electrode mixture slurry 96 hours after production was applied to both sides of a negative electrode current collector by doctor blade method to form negative electrode mixture layers on both sides of the negative electrode current collector. Then, the resultant was pressed with a mill roll and cut into a predetermined size. The resulting product was used as a negative electrode.

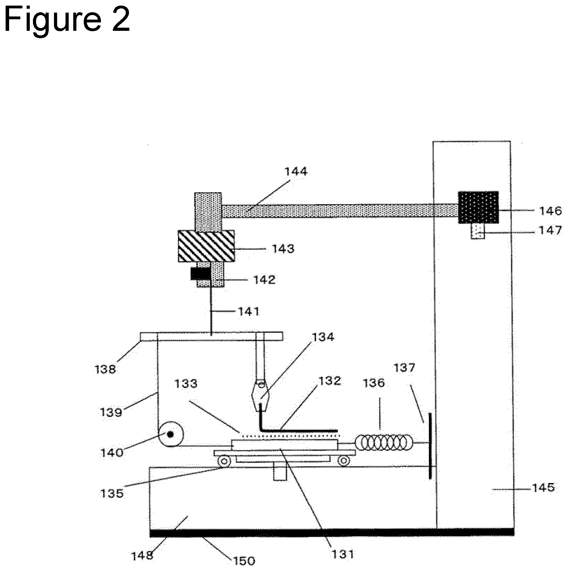

On the negative electrode of Example 1, the peel strength of the negative electrode mixture layer from the negative electrode current collector was determined using the device shown in FIG. 2. The device shown in FIG. 2 was composed of a stage 131 for mounting a specimen 132; an adhesive member 133 for fixing the specimen 132; a chuck 134 for fixing an edge of the specimen 132, the chuck being connected to a lifting holder 138; a bearing member 135 for sliding the stage 131 horizontally; a spring 136 for uniformly developing a force when the stage 131 slides; a fixing member 137 for connecting the spring 136; the lifting holder 138 connected to the stage 131 via a wire 139 and a pulley 140; a wire 141 for connecting the lifting holder 138 to a holding jig 142; a load cell 143 for detecting the load of the lifting holder 138, the load cell 143 being connected to the holding jig 142; a support member 144 for supporting the load cell 143; a driving member 146 for moving up and down the support member 144; a linear sensor 147 for detecting the shift of the holding jig 142; a prop 145 having the driving member 146 and the linear sensor 147 built-in; and a platform 148 for supporting the stage 131. The platform 148 and the prop 145 are fixed to a base 150.

A negative electrode cut into a size of a length of 15 mm and a wide of 120 mm was used as the specimen 132. The negative electrode (specimen 132) was fixed to the stage 131 with the attached member 133, and one end thereof was fixed with the chuck 134. The driving member 146 was started to lift the holding jig 142 at a constant speed to thereby pull the lifting holder 138, and with that pulling, the chuck 134 was lifted to thereby peel the negative electrode mixture layer from the negative electrode current collector. The stress at that time was determined with the load cell 143. After this determination, the lifting test was performed using the device from which the negative electrode was removed to determine the component of the force when only the stage 131 slid. The component of the force when only the stage 131 slid was subtracted from the stress when the negative electrode mixture layer was peeled from the negative electrode current collector, and the result was converted into the strength per unit length (m) to obtain the peel strength of the negative electrode mixture layer. The result is shown in Table 1.

[Non-Aqueous Electrolyte]

Ethylene carbonate (EC) and methyl ethyl carbonate (MEC) were mixed in a volume ratio of 30:70. Lithium hexafluorophosphate ($LiPF_6$) was dissolved in the resulting mixed solvent to a concentration of 1 mol/L. In addition, vinylene carbonate (VC) was dissolved therein in an amount of 2.0 wt% based on the whole amount of the electrolyte solution to thereby prepare a non-aqueous electrolyte.

[Non-Aqueous Electrolyte Secondary Battery]

The above-described positive electrode and negative electrode were wound together with a microporous polyethylene film interposed therebetween as a separator, and a polypropylene tape was applied to the outermost circumference to thereby produce a cylindrical electrode assembly. The assembly was then pressed to make a flat wound electrode assembly.

A laminate material in a sheet form having a five-layer structure, specifically, resin layer (polypropylene)/adhesive layer/aluminum alloy layer/adhesive layer/ resin layer (polypropylene), was provided. The laminate material was turned up to form a bottom portion, thereby forming a space in the form of a cup for housing an electrode assembly. In an argon atmosphere in a glove box, the above-described flat electrode assembly and non-aqueous electrolyte were introduced in the housing space. Then, the inside of the package was decompressed to impregnate the separator with the non-aqueous electrolyte. The opening of the package was sealed to produce a non-aqueous electrolyte secondary battery having a height of 62 mm, a width of 35 mm, and a thickness of 3.6 mm.

[Evaluation of Capacity Retention in Charging/Discharging Cycles]

In an environment at a temperature of 25 °C, the non-aqueous electrolyte secondary battery was charged at a constant current (current 1 It = 800 mA, final voltage 4.2 V) and charged at a constant voltage (voltage 4.2 V, final current 40 mA), and thereafter, the battery was discharged to 2.75 V at a current value of 800 mA. 300 cycles of such charging and discharging were conducted. The capacity retention in the charging/discharging cycles was determined using the following equation. The result is shown in Table 1.

$$Capacity\ Retention = (X2/X1) \times 100$$

X1: discharge capacity in the first cycle
X2: discharge capacity in the 300th Cycle

<Example 2>

A slurry for a negative electrode was produced in the same manner as in Example 1, except that in the production of the slurry for a negative electrode, the content of lithium carbonate was 166 ppm based on the total mass of the negative electrode mixture. Then, a negative electrode and a non-aqueous electrolyte secondary battery were produced in the same manner as in Example 1, except that the slurry for a negative electrode of Example 2 was used.

<Example 3>

A slurry for a negative electrode was produced in the same manner as in Example 1, except that in the production of the slurry for a negative electrode, the content of lithium carbonate was 300 ppm based on the total mass of the negative electrode mixture. Then, a negative electrode and a non-aqueous electrolyte secondary battery were produced in the same manner as in Example 1, except that the slurry for a negative electrode of Example 3 was used.

<Example 4>

A slurry for a negative electrode was produced in the same manner as in Example 1, except that in the production of the slurry for a negative electrode, the content of lithium carbonate was 33 ppm based on the total mass of the negative electrode mixture. Then, a negative electrode and a non-aqueous electrolyte secondary battery were produced in the same manner as in Example 1, except that the slurry for a negative electrode of Example 4 was used.

<Comparative Example 1>

A slurry for a negative electrode was produced in the same manner as in Example 1, except that in the production of the slurry for a negative electrode, no lithium carbonate was used. Then, a negative electrode and a non-aqueous electrolyte secondary battery were produced in the same manner as in Example 1, except that the slurry for a negative electrode of Comparative Example 1 was used.

<Comparative Example 2>

A slurry for a negative electrode was produced in the same manner as in Example 1, except that in the production of the slurry for a negative electrode, the content of lithium carbonate was 1 mass% based on the total mass of the negative electrode mixture. Then, a negative electrode and a non-aqueous electrolyte secondary battery were produced in the same manner as in Example 1, except that the slurry for a negative electrode of Comparative Example 2 was used.
As in Example 1, the change after 96 hours in the viscosity of the slurries for a negative electrode of Examples 2 to 4 and Comparative Examples 1 to 2, the peel strength of the negative electrode mixture layer of the negative electrodes of Examples 2 to 4 and Comparative Examples 1 to 2, and the capacity retention in the charging/discharging cycles of the non-aqueous electrolyte secondary batteries of Examples 2 to 4 and Comparative Example 1 were determined. These results are shown in Table 1. In Comparative Example 2, it was found that the peel strength of the negative electrode mixture layer decreased due to the excessive amount of lithium carbonate incorporated into the negative electrode, and therefore, the determination of the capacity retention was not conducted.

[Table 1]

|  | Lithium Carbonate Content (ppm) | Change in Viscosity after 96 Hours (%) | Peel Strength (N/m) | Capacity Retention in Charging/Discharging Cycles (%) |
|---|---|---|---|---|
| Example 1 | 66 | 89 | 5.6 | 62.2 |
| Example 2 | 166 | 96 | 4.9 | 61.7 |
| Example 3 | 300 | 105 | 4.2 | 62.6 |
| Example 4 | 33 | 77 | 4.3 | 61.4 |
| Comparative Example 1 | 0 | 63 | 2.8 | 60.2 |
| Comparative Example 2 | 10000 | 108 | 2.6 | - |

In Table 1, a smaller value (value lower than and farther from 100%) of the change in the viscosity after 96 hours means the occurrence of a more decrease in the viscosity of the slurry. Accordingly, it can be said from the results of the change in the viscosity after 96 hours in Table 1 that the decrease in the viscosity is prevented in the slurries for a negative electrode of Examples 1 to 4 compared to those of Comparative Examples 1 to 2. Because of this, the values of the peel strength of the negative electrode mixture layers of Examples 1 to 4 were larger than those of Comparative Examples 1 to 2. In other words, electrode mixture layers having desirable adhesiveness to a current collector were obtained by using the slurries for a negative electrode of Examples 1 to 4. In addition, compared to the non-aqueous electrolyte secondary battery of Comparative Examples 1, those of Examples 1 to 4 each had a larger value of the capacity retention in the charging/discharging cycles, and thus deterioration in charging/discharging cyclic characteristics was prevented in these secondary batteries.

REFERENCE SIGNS LIST

10      non-aqueous electrolyte secondary battery
11      positive electrode
12      negative electrode
13      separator
14      electrode assembly
15      battery case
16      package can
17      sealing assembly
18, 19  insulating plate
20      positive electrode lead
21      negative electrode lead
22      projecting portion
23      bottom board
24      lower vent member
25      insulating member
26      upper vent member
27      cap
28      gasket

**Claims**

1.  A slurry for an electrode of a non-aqueous electrolyte secondary battery, including:

an electrode mixture including an electrode active material, lithium carbonate, and carboxymethyl cellulose or a salt thereof; and water,

wherein a content of the lithium carbonate is within the range from 33 ppm to 300 ppm based on the total mass of the electrode mixture.

2. A method for producing a slurry for an electrode of a non-aqueous electrolyte secondary battery, comprising mixing: an electrode mixture including an electrode active material, lithium carbonate, and carboxymethyl cellulose or a salt thereof; and water, to thereby produce the slurry for an electrode,

wherein a content of the lithium carbonate is within the range from 33 ppm to 300 ppm based on the total mass of the electrode mixture.

3. An electrode for a non-aqueous electrolyte secondary battery, comprising: a current collector and an electrode mixture layer on the current collector,

the electrode mixture layer including an electrode active material, lithium carbonate, and carboxymethyl cellulose or a salt thereof,

wherein a content of the lithium carbonate is within the range from 33 ppm to 300 ppm based on the total mass of the electrode mixture layer.

4. A non-aqueous electrolyte secondary battery including a positive electrode, a negative electrode, and a non-aqueous electrolyte, wherein at least one of the positive electrode and the negative electrode is the electrode for a non-aqueous electrolyte secondary battery according to claim 3.

# Figure 1

# Figure 2

## INTERNATIONAL SEARCH REPORT

| | International application No. |
|---|---|
| | PCT/JP2020/007025 |

A.  CLASSIFICATION OF SUBJECT MATTER
H01M 4/13(2010.01)i; H01M 4/139(2010.01)i; H01M 4/62(2006.01)i
FI: H01M4/13; H01M4/62 Z; H01M4/139

According to International Patent Classification (IPC) or to both national classification and IPC

B.  FIELDS SEARCHED

Minimum documentation searched (classification system followed by classification symbols)
H01M4/13; H01M4/139; H01M4/62

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2017-191771 A (SHIN-ETSU CHEMICAL CO., LTD.) 19.10.2017 (2017-10-19) paragraphs [0124]-[0133], [0163], example 4-2 | 1-4 |
| X | CN 105470476 A (WANXIANG A123 SYSTEMS CO., LTD.) 06.04.2016 (2016-04-06) paragraph [0021], example 2 | 1-4 |

☐  Further documents are listed in the continuation of Box C.  ☒  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April 2020 (23.04.2020) | 19 May 2020 (19.05.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/007025

| Patent Documents referred in the Report | Publication Date | Patent Family | Publication Date |
|---|---|---|---|
| JP 2017-191771 A | 19 Oct. 2017 | (Family: none) | |
| CN 105470476 A | 06 Apr. 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7235297 A
- JP HEI8138743 A
- JP 2013114959 A
- JP 2003272619 A
- WO 2012002451 A
- WO 2012011555 A